# EUROPEAN PATENT APPLICATION

(11) **EP 1 954 040 A2**
(43) Date of publication of application: **06.08.2008**
(21) Application number: 07117415.5
(22) Date of filing: 27.09.2007
(51) Int. Cl.: H04N 5/765

(54) **Method and apparatus for processing data**

(30) Priority: 01.02.2007 KR 20070010630
(71) Applicant: Samsung Electronics Co., Ltd., Suwon-si, Gyeonggi-do 442-742 (KR)
(72) Inventor: Hong, Joo-sun, Gyeonggi-do (KR)
(74) Representative: Clark, David James

(57) **Abstract**

A method and an apparatus for processing data are provided. A first memory (365) stores data input from a source; a message processor (347) displays a message asking whether to connect to a second memory (300a) capable of storing data, if space left on the first memory (365), which is available for storing data, reaches a threshold value; an interface part (370) is connected to the second memory (300a); and a controller (360) controls the interface part (370) to transmit to the connected second memory (300a) data stored from the time of selecting connection to the second memory (300a), if the connection to the second memory (300a) is selected in response to the message and the second memory (300a) is connected.

## Description

### BACKGROUND OF THE INVENTION

### 1. Field of the Invention

Apparatuses and methods consistent with the present invention relate to processing data, and more particularly but not exclusively, to processing data so that loss of data is prevented when a memory is replaced in the situation that the data is stored and played back in at least two memories, so that the data can be continuously stored and played back.

### 2. Description of the Related Art

Digital recording players record transport streams in memories, and play back the recorded transport streams, and typically include, for example, digital video recorders (DVRs), personal video recorders (PVRs), or other devices. Recently, digital recording players have been developed which record transport streams not only in internal memories but also in external memories which are connected to digital recording players via interfaces.

Generally, users cannot directly replace internal memories, but can easily replace external memories. Accordingly, if when recording a transport stream of broadcasting currently being viewed in an internal memory or an external memory, the external memory capacity is not sufficient, a user can replace the external memory with other external memories in order to continuously record the transport stream.

However, if the user replaces other external memories when recording the transport stream of broadcasting currently being viewed in internal memory or an external memory, it is impossible to separately store the transport stream while replacing the external memory in a related art digital recording player. Accordingly, loss of a corresponding transport stream occurs when replacing the external memory, the related art digital recording player cannot record and play back the damaged transport stream, and thus it is impossible for the user to view the damaged transport stream.

### SUMMARY OF THE INVENTION

Exemplary embodiments of the present invention aim to overcome the above disadvantages and other disadvantages not described above.

According to an aspect of the present invention, there is provided a data processing method comprising storing data input from a source on a first memory; selecting whether to connect to a second memory capable of storing data, if space left on the first memory, which is available for storing the data, reaches a threshold value; and completing connection to the second memory if connection to the second memory is selected, and storing data stored from the time of selecting the connection in the connected second memory.

The first memory may be at least one of a removable memory and an embedded memory.

The method may further comprise, if the first memory is the removable memory, storing on an internal memory the data transmitted from the time of selecting the connection if the connection to the second memory is selected; and checking a start address of a region in which the data is stored and storing the start address on the internal memory. The storing may comprise checking the stored start address and transmitting the data stored from the time corresponding to the checked start address to the connected second memory, if the second memory is connected.

The method may further comprise, if the first memory is the embedded memory, storing an address of the first memory in which the data is stored at the time of selecting the connection if the connection to the second memory is selected. The storing may comprise checking the stored address, and transmitting the data stored from the time corresponding to the checked address to the connected second memory.

The method may further comprise labeling the first memory with one of a series of letters to indicate the order of storing the data if the connection to the second memory is selected; and labeling the second memory with a letter which follows in sequence from the letter used to label the first memory if the connection to the second memory is completed.

The method may further comprise recording information indicating the presence of another memory, in which the data is continuously stored, on the first memory if the connection to the second memory is selected.

The method may further comprise, prior to the transmitting, recording on the connected second memory the title of the data recorded on the first memory, and the start address of the data stored on the connected second memory, if the connection to the second memory is completed.

The selecting may comprise generating an on-screen display (OSD) message asking whether to connect to the second memory capable of storing data, and displaying the message.

The selecting may comprise displaying in the OSD message the amount of time available for storing data, which reduces as the time elapses.

The method may further comprise, if the first memory is the removable memory, processing the data stored on the first memory in a signal and playing back the processed data, if playback of the data stored on the first memory is requested; informing that connection to another memory is required, if it is confirmed that the data is continuously stored on the first memory and on the other memory while playing back the data; storing on the internal memory remaining data which is not played back from the removable memory, prior to the connection to the other memory; and if the other memory is connected, playing back the remaining data stored on the internal memory, and continuously playing back the data stored on the connected other memory.

The method may further comprise, if the first memory is the embedded memory, processing the data stored on the first memory in a signal and playing back the processed data, if playback of the data stored on the first memory is requested; informing that connection to another memory is required, if it is confirmed that the data is continuously stored on the first memory and on the other memory while playing back the data; and if the other memory is connected, completing the playback of the data stored in the embedded memory, and continuously playing back the data stored on the connected other memory.

The method may further comprise, if the other memory is connected, checking whether the connected other memory is the second memory which continuously stores the data after the data is stored on the first memory. The playing back may comprise playing back the data stored on the other memory if it is confirmed that the other memory is the second memory.

The checking may comprise determining that the connected other memory is the second memory which continuously stores the data, if the letter on the other memory follows in sequence the letter on the first memory.

According to another aspect of the present invention, there is provided a data processing apparatus comprising a first memory which stores data input from a source; a message processor which displays a message asking whether to connect to a second memory capable of storing data, if space left on the first memory, which is available for storing the data, reaches a threshold value; an interface part which is connected to the second memory; and a controller which controls the interface part to transmit data stored in the connected second memory from the time that the connection to the second memory is selected, if the connection to the second memory is selected in response to the message and the second memory is connected.

When the first memory is the removable memory, if the connection to the second memory is selected, the controller may store in an internal memory the data transmitted from the time of selecting the connection, together with a start address of a region in which the data is stored. If the second memory is connected to the interface part, the controller may check the start address stored on an internal memory, and control the interface part to transmit to the connected second memory the data stored from the time corresponding to the checked start address.

When the first memory is the embedded memory, if the connection to the second memory is selected, the controller may store an address of the first memory in which the data is stored at the time of selecting the connection. If the second memory is connected to the interface part, the controller may check the stored address, and control the interface part to transmit to the connected second memory the data stored from the time corresponding to the checked address.

If the connection to the second memory is selected, the controller may label the first memory with one of a series of letters to indicate the order of storing the data, and if the connection to the second memory is completed, the controller may label the second memory with a letter which follows in sequence from the letter used to label the first memory.

If the connection to the second memory is selected, the controller may record information indicating the presence of another memory, in which the data is continuously stored, in the first memory.

If the connection to the second memory is completed, the controller may initialize the connected second memory, record in the connected second memory the title of the data recorded on the first memory and the start address of the data stored on the connected second memory, and control the first memory to transmit the data to the connected second memory if the initialization is completed.

If the first memory is the removable memory, the apparatus may further comprise a signal processor which processes the data stored on the first memory in a signal and plays back the processed data, if playback of the data stored on the first memory is requested. The controller may control the message processor to display a message informing that connection to another memory is required, if it is confirmed that the data is continuously stored on the first memory and on the other memory while playing back the data; temporarily store on the internal memory remaining data which is not played back from the first memory, prior to the connection to the other memory; and control the signal processor to play back the temporarily stored data and to play back the data stored on the connected other memory, if the other memory is connected.

If the first memory is the embedded memory, the apparatus may further comprise a signal processor which processes the data stored on the first memory in a signal and plays back the processed data, if playback of the data stored on the first memory is requested. If it is confirmed that the data is continuously stored on the first memory and on the other memory while playing back the data, the controller may control the message processor to display a message informing that connection to the other memory is required. If the other memory is connected, the controller may control the signal processor to complete the playback of the remaining data stored on the first memory and to play back the data stored on the connected other memory.

If the other memory is connected, the controller may check whether the connected other memory is the second memory which continuously stores the data after the data is stored on the first memory, and if it is checked that the other memory is the second memory, the controller may control the signal processor to play back the remaining data stored on the first memory and to play back the data stored on the second memory.

The controller may determine that the connected other memory is the second memory which continuously stores the data, if the letter on the other memory follows in sequence the letter on the first memory.

The message processor may display in the OSD message the amount of time available for storing data, which reduces as the time elapses.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram schematically illustrating a data processing apparatus according to an exemplary embodiment of the present invention;
FIG. 2 is a flowchart schematically explaining a data processing method of the data processing apparatus of FIG. 1, according to an exemplary embodiment of the present invention;
FIG. 3 is a block diagram schematically illustrating a data processing apparatus according to another exemplary embodiment of the present invention;
FIG. 4 is a view illustrating an example of an on-screen display (OSD) message displayed on a television (TV);
FIG. 5 is a view schematically illustrating the structure of the internal memory shown in FIG. 3;
FIG. 6 is a flowchart schematically explaining a data processing method of the data processing apparatus of FIG. 3, according to another exemplary embodiment of the present invention; and
FIG. 7 a flowchart schematically explaining another data processing method of the data processing apparatus of FIG. 3, according to another exemplary embodiment of the present invention.

### DETAILED DESCRIPTION OF THE EXEMPLARY EMBODIMENTS

Certain exemplary embodiments of the present invention will now be described in greater detail with reference to the accompanying drawings.

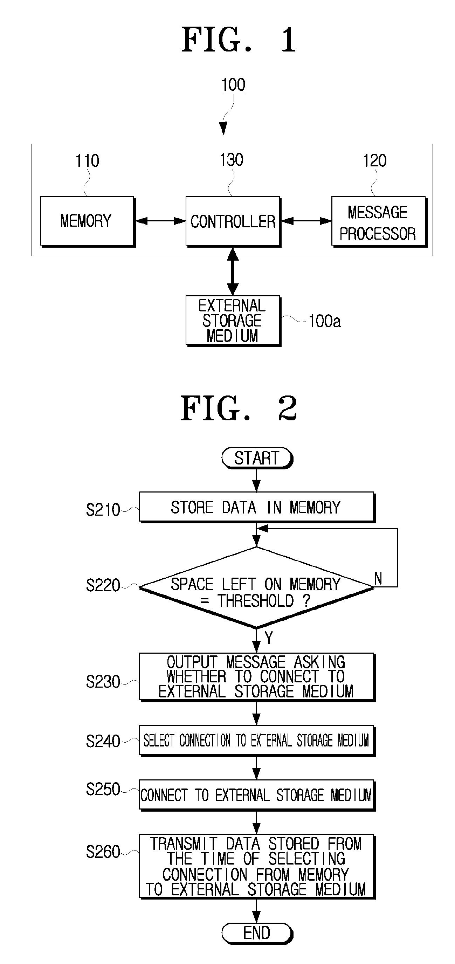

FIG. 1 is a block diagram schematically illustrating a data processing apparatus according to an exemplary embodiment of the present invention.

The data processing apparatus according to an exemplary embodiment of the present invention may continuously store data in an external memory without loss of data, even if there is no space left on the memory for storing data. The data processing apparatus may be implemented as a digital recording player such as a personal video recorder (PVR) or a digital video recorder (DVR).

In particular, if the external memory is not connected to the digital processing apparatus, a message requesting connection to the external memory may be provided to a user, the data may be stored in a separate storage region while the external memory is being connected and then stored in the connected external memory again, which can prevent data loss.

For this, the data processing apparatus 100 comprises a memory 110, a message processor 120, and a controller 130.

The memory 100 as a first memory refers to a large capacity storage medium which stores data input from a signal source, and may comprise a NAND Flash Memory, a NOR Flash Memory, a Hard Disk Drive (HDD), or other memories. The memory 110 may be implemented as either an embedded memory installed in the data processing apparatus 100 or a removable memory connected to the data processing apparatus 100 via a communication interface.

If space for storing data remaining on the memory 110 reaches a set threshold value, the message processor 120 may display a message asking a user whether to connect to the data processing apparatus 100 an external storage medium 100a as a second memory capable of storing data. The message may include a request to connect to the external storage medium 100a.

The message may also ask a user to determine whether to continuously store the data on the external storage medium, and inform the user that there is insufficient space left on the memory 110. The message processor 120 may display a message indicating a amount of time available for storage. The message may be processed as an image such as an on-screen display (OSD), or may be output as sound such as an alarm sound.

If it is determined that the space remaining on the memory 110 reaches the threshold value, the controller 130 may control the message processor 120 to display the message. The controller 130 may compute the amount of time available for storage from the space left on the memory 110, and may control the message processor 120 to display the computed amount of time together with the message.

Additionally, if the request to connect to the external storage medium 100a is selected in response to the message and the external storage medium 100a is then connected to the data processing apparatus 100, the controller 130 may transmit data from the memory 110 to the connected external storage medium 100a. The data that would be transmitted to the connected external storage medium 100a would be the data that has been stored on the memory 110 since the request to connect to the external storage medium 100a has been selected. In other words, the controller 130 may enable the data stored from the time of selecting the connection to be continuously stored in the external storage medium 100a.

FIG. 2 is a flowchart schematically explaining a data processing method of the data processing apparatus of FIG. 1, according to an exemplary embodiment of the present invention.

Referring to FIGS. 1 and 2, if space left on the memory 110, which is available for storing the data, reaches the set threshold value (S220) while storing the data input from the signal source in the memory 110 (S210), the controller 130 may control the message processor 120 to display a message asking whether to store the data on the connected external storage medium 100a (S230).

If the connection to the external storage medium 100a is selected in response to the displayed message (S240) and the external storage medium 100a is then connected to the data processing apparatus 100 (S250), the controller 130 may transmit the data which has been stored from the time of selecting the connection to the external storage medium 100a, from the memory 110 to the connected external storage medium 100a. Accordingly, the data may be stored in the memory 110, and continuously stored in the external storage medium 100a (S260).

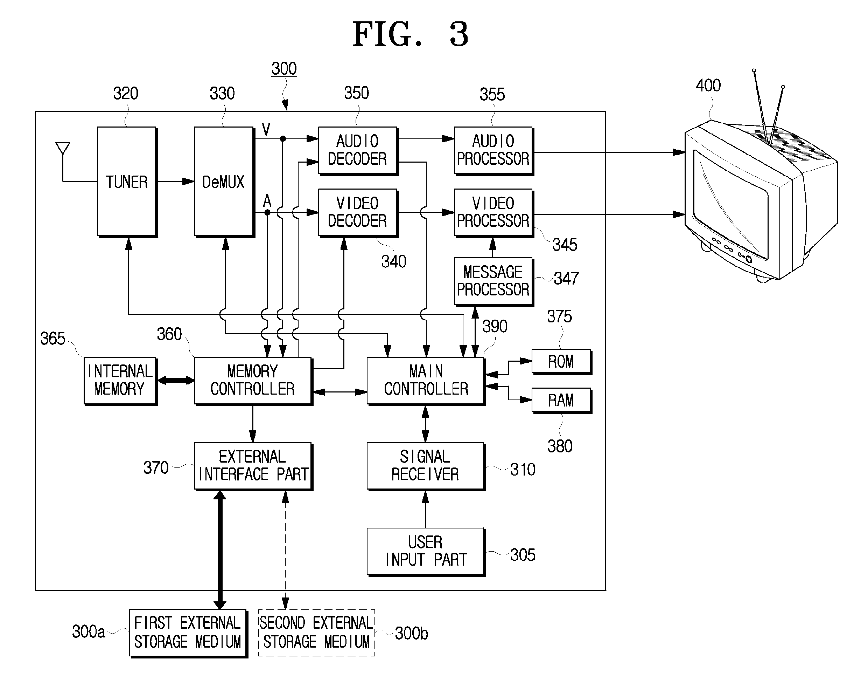

FIG. 3 is a block diagram schematically illustrating a data processing apparatus according to another exemplary embodiment of the present invention.

In FIG. 3, a data processing apparatus 300 according to another exemplary embodiment of the present invention comprises a user input part 305, a signal receiver 310, a tuner 320, a demultiplexer (DeMUX) 330, a video decoder 340, a video processor 345, a message processor 347, an audio decoder 350, an audio processor 355, a memory controller 360, an internal memory 365, an external interface part 370, a read only memory (ROM) 375, a random access memory (RAM) 380, and a main controller 390.

The data processing apparatus 300 shown in FIG. 3 stores desired audio/video signals in the internal memory 365 and an external memory 300a, based on a moving picture compression technique, such as the Moving Picture Experts Group (MPEG) format, and interfaces with a television (TV) 400. The data processing apparatus 300 may be installed inside or outside the TV 400.

Hereinafter, description will be mainly given of a situation in which the data is stored in the first external storage medium 300a connected to the data processing apparatus 300 while a time shift function is automatically performed.

The user input part 305 serves as a user interface through which functions supported by the data processing apparatus 300 are requested, set or changed. The user input part 305 comprises various buttons, number keys, direction keys, function keys, shortcut keys, or other input means, and is mounted in the front of a main body of the data processing apparatus 300 in order to accommodate user convenience.

A user may manipulate the user input part 305 in order to perform functions such as recording of broadcasting being viewed, playback of the recorded broadcasting, recording a schedule of broadcasting, a time shift function, or other functions. The user input part 305 may be implemented by a remote controller, a wired/wireless mouse, an optical mouse, or other input device.

For example, the time shift function refers to a function in which a broadcast signal of an automatically tuned channel is stored in an assigned region in the internal memory 365 when the data processing apparatus 300 is turned on. Accordingly, if the broadcast signal fills the assigned region, the broadcast signal may be continuously restored from a start address of the assigned region.

The signal receiver 310 receives user manipulation signals which are transmitted from the user input part 305 and include, for example, a recording request signal and a playback request signal, and outputs the received signals to the main controller 390.

The tuner 320 tunes to a channel previously selected from among broadcast signals of various channels received via an antenna under the control of the main controller, and demodulates a broadcast signal of the tuned channel.

The DeMUX 330 divides the demodulated signal into a video signal and an audio signal, and outputs the divided video and audio signals respectively to the video decoder 340, and to the audio decoder 350 and memory controller 360.

The video decoder 340 decodes the video signal input from the DeMUX 330 in response to the recording or playback request signals received from the user input part 305. If playback of a transport stream stored in the first external storage medium 300a is requested by the user input part 305, the video decoder 340 may decode video data output from the first external storage medium 300a.

Additionally, the video decoder 340 may then output the decoded video signal to the video processor 345 and the main controller 390. The video decoder 340 may decode the video signal using a set demodulation method. For example, the video decoder 340 supports a compression decoding technique by the Moving Picture Experts Group-2 (MPEG-2) format.

The video processor 345 improves the image quality of the decoded video signal, and converts the signal into a viewable signal by scaling. The converted video signal is transmitted to the connected TV 400 to be displayed. Additionally, the video processor 345 combines a message generated by the message processor 347 with the video signal to be output to the TV 400.

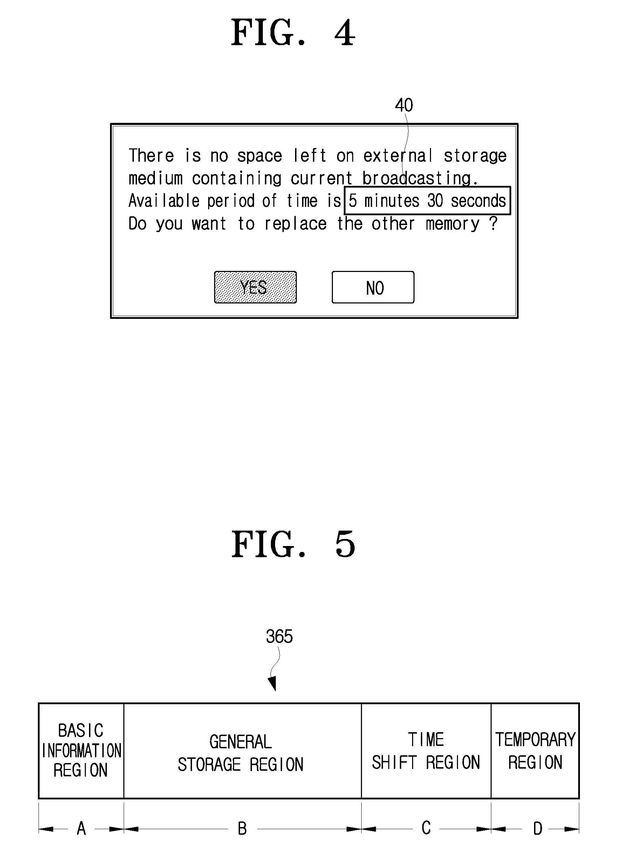

The message processor 347 generates an on-screen display (OSD) message shown in FIG. 4, and processes the message with a displayable signal. In order to inform a user that there is not enough space left on the internal memory 365 in which the data is stored, the OSD message shown in FIG. 4 comprises time information 40 regarding the amount of time available for storage and content asking whether to connect an external storage medium capable of storing data to the data processing apparatus 300. Additionally, the message processor 347 generates an OSD message in which the time information 40 which reduces as the time elapses is displayed.

The audio decoder 350 decodes the audio signal received from the DeMUX 330. The audio processor 355 processes the decoded audio signal into an audible signal, and amplifies the signal to a set volume to be transmitted to the TV 400. Accordingly, the amplified audio signal is output to the outside through a speaker of the TV 400.

If the broadcast signal is stored on the internal memory 365 or the first external storage medium 300a, the memory controller 360 may control the audio and video signals output from the DeMUX 330 to be output to the internal memory 365 or the first external storage medium 300a and to be stored on the internal memory 365 or the first external storage medium 300a.

Additionally, if a file stored on the internal memory 365 or the first external storage medium 300a is played back, the memory controller 360 may read the file from the internal memory 365 or the first external storage medium 300a and output the file to at least one of the video decoder 340 and the audio decoder 350. For the memory controller 360, an Advanced Technology Attachment (ATA) memory controller using an ATA bus may be used.

The internal memory 365 stores various types of signals, such as a broadcast signal received by the tuner 320, a moving image and a still image provided from the first external storage medium 300a, or other types of signal.

FIG. 5 is a view schematically illustrating the structure of an internal memory of FIG. 3.

In FIG. 5, the internal memory 365 is largely divided into four regions, a basic information region A, a general storage region B, a time shift region C, and a temporary region D. The basic information region A refers to a region which stores information associated with data stored in the general storage region B and time shift region C. For example, if a broadcast signal is currently stored in the time shift region C, various information may be stored in the basic information region A, such as information regarding the broadcast name of the broadcast signal, the storage start address of the broadcast signal, the storage end address of the broadcast signal, the broadcasting quantity or other information.

The general storage region B refers to a region in which data is stored in all modes, except a time shift mode. The time shift region C means a region in which data corresponding to the time shift function is stored, and the temporary region D means a region for temporarily storing data.

For example, if a user desires to store data stored in the first external storage medium 300a on the exchanged second external storage medium 300b while the time shift function is not being performed, the data being transmitted while the second external storage medium 300b is being replaced may be stored in the temporary region D under the control of the main controller 390, and then stored in the second external storage medium 300b again. Accordingly, it is possible to prevent loss caused by the replacement of the first external storage medium 300a by the second external storage medium 300b.

On the other hand, if a user desires to store data stored in the first external storage medium 300a on the exchanged second external storage medium 300b while the time shift function is being performed, data loss may be prevented using the temporary region D or the time shift region C. This description will be given in detail below with reference to the main controller 390.

The user may designate the directory and the storage name by manipulating the user input part 305, and may then store data in the internal memory 365 or the first external storage medium 300a.

Referring back to FIG. 3, the external interface part 370 is used as an intermediate route which connects one or more first external storage media 300a to the memory controller 360, and performs data communication with the first external storage medium 300a. If a command to store data in the first external storage medium 300a is output from the user input part 305, the external interface part 370 may output the data and basic information to the first external storage medium 300a.

Therefore, the data is stored in a data region of the first external storage medium 300a, and the basic information associated with the data is stored in the basic information region. If the data being stored is a broadcast signal, basic information regarding the broadcast signal may comprise information regarding the storage name prepared by the user input part 305, the original name of a broadcast program, the duration of the recording, the file size of the broadcast or other information.

In addition, if playback of a file stored in the first external storage medium 300a is requested by the user input part 305, the external interface part 370 may output to the memory controller 360 a target file output from the first external storage medium 300a.

The external interface part 370 may be connected to the first external storage medium 300a, which may be a hard disk drive (HDD) or a flash memory card, under a Universal Serial Bus (USB) standard, an IEEE 1394 standard or other standard. If a plurality of physical interfaces are included in the external interface part 370, the number of applicable communication standards and the number of external storage media may be unlimited.

The ROM 375 stores various control programs such as a booting program, system termination program or other programs which are required to implement functions of the data processing apparatus 300, and stores the threshold value which may be compared to the space available for storing data. The threshold value is described later.

The RAM 380 temporarily stores the data processed by the main controller 390, the decoded video signal output from the video decoder 340 or other data.

The main controller 390 controls the above-described operations of the exemplary embodiment of the present invention and the operations of the data processing apparatus 300 corresponding to user requests input from the signal receiver 310, using various control programs stored in the ROM 375 and a formatting program.

If the data processing apparatus 300 is turned on, the main controller 390 may boot the data processing apparatus 300, and initialize the internal memory 365 and first external storage medium 300a. When the data processing apparatus 300 is fully booted, the main controller 390 may receive and play back the broadcast signal on the tuned channel while automatically storing the broadcast signal in the time shift region C and performing the time shift function. This is because the time shift function is set to be performed automatically when the data processing apparatus 300 is turned on.

If recording of current broadcasting is requested by the user input part 305, the main controller 390 may control the DeMUX 330 to output the video and audio signals to the memory controller 360, and permit the memory controller 360 to store the video and audio signals in the first external storage medium 300a.

The main controller 390 periodically checks the space remaining on the first external storage medium 300a while playing back the broadcast signal and storing the signal in the first external storage medium 300a. In other words, the main controller 390 checks how many bytes of disk space for storing data remain on the first external storage medium 300a. Additionally, if the checked space reaches the set threshold value, the main controller 390 may control the message processor 347 and video processor 345 to generate the OSD message shown in FIG. 4 and to output the generated message to the TV 400. At this time, the main controller 390 computes the amount of time available for storage and outputs information on the computed amount of time to the message processor 347. Accordingly, the time information 40 which reduces as the time elapses is displayed in the OSD message.

If a user selects "YES" in response to the OSD message shown in FIG. 4, that is, if a user selects a connection to the second external storage medium 300b, the main controller 390 may store an address of the internal memory 365, in which the broadcast signal is stored at the time of selecting "YES", in the RAM 380 or the basic information region A of the internal memory 365. This is because the current broadcast signal is stored also in the internal memory 365 by the time shift function.

Additionally, the main controller 390 labels the basic information region A of the first external storage medium 300a with a letter, broadcast program title, or the like. The letter may be one of various types of characters, such as numbers, Korean characters or other characters, but numbers may generally be used.

If the first external storage medium 300a is separated from the external interface part 370 and the second external storage medium 300b is connected to the external interface part 370, the main controller 390 may initialize the second external storage medium 300b. Additionally, the main controller 390 may label the second external storage medium 300b with a letter, broadcast program title, or the like following in sequence from the letter, broadcast program title, or the like used to label the first external storage medium 300a. This labeling is performed in order to check whether the first external storage medium 300a and second external storage medium 300b are connected to the external interface part 370 in the correct order when playing back the data stored in the first external storage medium 300a and second external storage medium 300b.

Furthermore, the main controller 390 controls the message processor 347 and video processor 345 to display an OSD message which shows information regarding the second external storage medium 300b, which is stored in the basic information region of the second external storage medium 300b. The information regarding the second external storage medium 300b comprises, for example, the type, the total disk space and the disk space available for storing on the second external storage medium 300b.

If the user selects "OK" in response to the displayed OSD message, the main controller 390 may control the memory controller 360 so that a broadcast signal from the time corresponding to the start address of the broadcast signal in the basic information region A of the internal memory 365 may be stored in the second external storage medium 300b. Therefore, even if the first external storage medium 300a is replaced by the second external storage medium 300b, the broadcast signal may be stored on the internal memory 365 while the first external storage medium 300a is being replaced, and be continuously stored in the second external storage medium 300b. Accordingly, it is possible to prevent data loss.

On the other hand, if "Cancel" is selected in response to the OSD message indicating the information regarding the second external storage medium 300b, the main controller 390 may continuously store the broadcast signal in the first external storage medium 300a. If there is no space left on the first external storage medium 300a, the main controller 390 may terminate storage of the broadcast signal, and the broadcast signal may be stored in the time shift region C of the internal memory 365 using the time shift function.

The situation in which the time shift function is automatically performed was exemplary described in the exemplary embodiment of the present invention, but if the time shift function is not automatically performed, the recording request signal may be received. In this situation, if the space left on the first external storage medium 300a reaches the threshold value, the main controller 390 may control the OSD message of FIG. 4 to be displayed.

If "YES" is selected in response to the displayed OSD message, the main controller 390 may control the memory controller 360 to store a broadcast signal being transmitted from the time of selecting "YES" in the general storage region B or the temporary region D of the internal memory 365. Additionally, the main controller 390 may control the memory controller 360 so that the start address of the time when the broadcast signal is stored in the general storage region B or the temporary region D of the internal memory 365 together with the basic information of the broadcast signal may be stored in the basic information region A of the internal memory 365. In other words, the exemplary embodiments of the present invention can achieve the above effect using the internal memory 365, even if the time shift function is not automatically performed.

Additionally, in the exemplary embodiments of the present invention, the broadcast signal stored after receiving the recording request signal is stored on the first external storage medium 300a. Alternatively, the broadcast signal may also be stored on the internal memory 365. For example, if the space left on the internal memory 365 reaches the threshold value while the broadcast signal is stored in the general storage region B of the internal memory 365, the main controller 390 may process such that the broadcast signal is continuously stored in the first external storage medium 300a or the second external storage medium 300b.

The process for continuously storing the broadcast signal in at least two different memories was described above. Hereinafter, a process for continuously playing back the broadcast signal stored in at least two different memories will be described.

If a playback request signal requesting playback of the data of the file stored in the first external storage medium 300a is received by the user input part 305, the main controller 390 may control the memory controller 360, video decoder 340 and video processor 345 to read the data stored on the first external storage medium 300a and process the read data in a signal that can be played back.

The main controller 390 checks the basic information region of the first external storage medium 300a to determine whether there is additional memory, while playing back the data stored in the first external storage medium 300a. Specifically, if information that the data is stored in the first external storage medium 300a and continuously stored in the other memory is stored in the basic information region of the first external storage medium 300a, the main controller 390 may determine that there is the additional memory.

Additionally, the main controller 390 permits the message processor 347 and video processor 345 to generate and display an OSD message indicating the presence of the additional memory. The displayed OSD message refers to the content, for example, "Further data is stored in another memory. Do you want to connect to the other memory ?".

If the user selects "YES" in response to the OSD message displayed on the TV 400, that is, the connection to the other memory is selected, the main controller 390 may control the memory controller 360 so that remaining data which is not played back in the first external storage medium 300a can be output to the internal memory 365. For example, the main controller 390 may control the memory controller 360 to output data from the time of selecting "YES" to the temporary region D of the internal memory 365 to be stored. At this time, the main controller 390 may control the memory controller 360 to read the remaining data by increasing the speed to two times or more and output the data to the internal memory 365.

If the second external storage medium 300b is connected to the external interface part 370, the main controller 390 may check whether the letter used to label the second external storage medium 300b follows in sequence from the letter used to label the first external storage medium 300a.

If the letter follows in sequence the label used for the first external storage medium 300a, the main controller 390 may determine that the external storage medium 300a and second external storage medium 300b are connected in the correct order. Additionally, the main controller 390 processes the remaining data stored on the internal memory 365 to be played back and the data stored in the second external storage medium 300b to be continuously played back.

On the other hand, if the letter does not follow in sequence the label used for the first external storage medium 300a, for example, the label of the first external storage medium 300a is "1" and the label of the second external storage medium 300b is "3", the main controller 390 may determine that the memories are connected in the wrong order. Accordingly, the main controller 390 may control the message processor 347 and video processor 345 to generate an OSD message stating that "Memory is incorrectly connected" and display the generated OSD message.

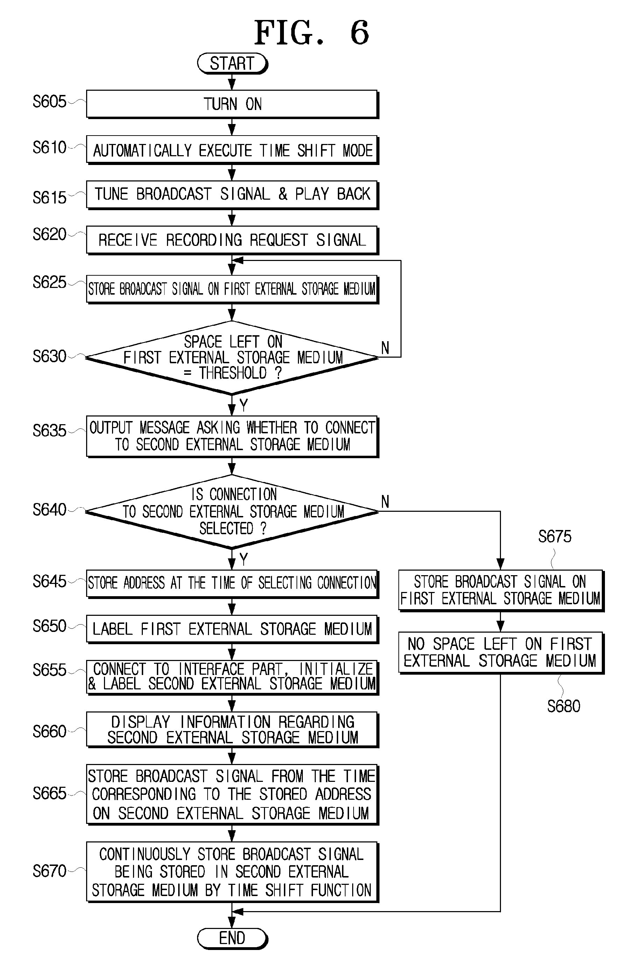

FIG. 6 is a flowchart explaining a method for continuously storing data in the data processing apparatus of FIG. 3, according to another exemplary embodiment of the present invention.

Referring to FIGS. 3 to 6, if the data processing apparatus 300 is turned on (S605), the main controller 390 may automatically perform the time shift mode (S610).

The main controller 390 processes such that the broadcast signal on the tuned channel may be played back while being stored in the time shift region C (S615).

If the recording request signal of the current broadcasting is received by the user input part 305, the main controller 390 may control the DeMUX 330 to output the video and audio signals to the memory controller 360, and permit the memory controller 360 to store the video and audio signals in the first external storage medium 300a (S625).

If the space left on the first external storage medium 300a reaches the set threshold value (S630) during operation S625, the main controller 390 may control the message processor 347 and video processor 345 to generate the OSD message shown in FIG. 4 and to output the generated message to the TV 400 (S635).

After operation S635, if a user selects connection to the second external storage medium 300b, that is, selects "YES" in response to the OSD message (S640), the main controller 390 may control the memory controller 360 to store the address of the internal memory 365, in which the broadcast signal is stored at the time of selecting "YES", in the basic information region A of the internal memory 365 (S645).

Additionally, the main controller 390 labels the basic information region of the first external storage medium 300a with a letter, broadcast program title, or the like (S650).

After operation S650, if the second external storage medium 300b is connected to the external interface part 370, the main controller 390 may initialize the second external storage medium 300b, and may label the second external storage medium 300b with a letter, broadcast program title, or the like which follows in sequence from the letter, broadcast program title, or the like labeled to the first external storage medium 300a (S655). This labeling is performed in order to check whether the first external storage medium 300a and second external storage medium 300b are connected to the external interface part 370 in the correct order when playing back the data stored in the first external storage medium 300a and second external storage medium 300b.

After operation S655, the main controller 390 controls the message processor 347 and video processor 345 to display an OSD message which indicates information regarding the second external storage medium 300b which is stored in the basic information region of the second external storage medium 300b (S660). The information regarding the second external storage medium 300b comprises, for example, the type, the total disk space and the disk space available for storing on the second external storage medium 300b.

If the user selects "OK" in response to the displayed OSD message, the main controller 390 may control the memory controller 360 so that a broadcast signal from the time corresponding to the start address of the broadcast signal in the basic information region A of the internal memory 365 may be stored in the second external storage medium 300b (S665).

The broadcast signal is continuously stored in the time shift region C of the internal memory 365 by the time shift function in operation S665, and thus the main controller 390 may control the memory controller 360 to continuously output the broadcast signal being continuously stored to the second external storage medium 300b and store the broadcast signal in the second external storage medium 300b (S670).

On the other hand, if "Cancel" is selected in operation S640, the main controller 390 may continuously store the broadcast signal in the first external storage medium 300a (S675). If there is no space left on the first external storage medium 300a, the main controller 390 may terminate storage of the broadcast signal (S680). The broadcast signal may be stored in the time shift region C of the internal memory 365 by the time shift function.

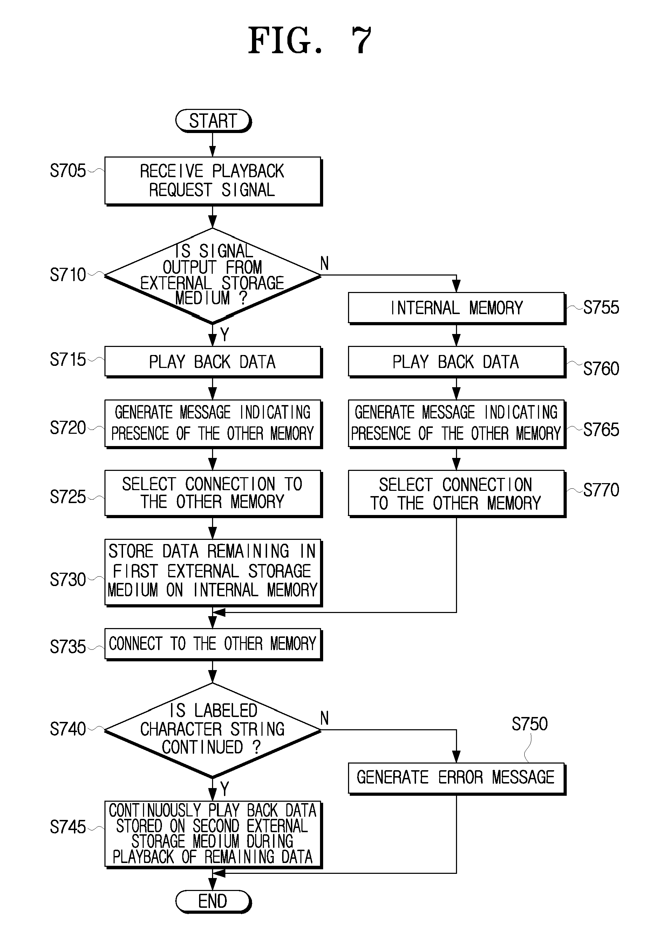

FIG. 7 a flowchart explaining a method for continuously playing back data in the data processing apparatus of FIG. 3, according to another exemplary embodiment of the present invention.

Referring to FIGS. 3 to 7, if the playback request signal is received by the user input part 305 (S705) and the received signal is a signal requesting playback of the data stored in the first external storage medium 300a (S710), the main controller 390 may control the memory controller 360, video decoder 340 and video processor 345 to read out the data stored in the first external storage medium 300a and play back the read data (S715).

If it is confirmed that the data being played back is further stored in the other memory during operation S715, the main controller 390 may permit the message processor 347 and video processor 345 to generate and display an OSD message indicating the presence of the additional memory (S720).

If the user selects "YES" in response to the OSD message displayed in operation S720, that is, the connection to the other memory is selected (S725), the main controller 390 may control the memory controller 360 so that remaining data which has not been played back in the first external storage medium 300a can be output to the internal memory 365 to be stored (S730). At this time, the main controller 390 may control the memory controller 360 to read the remaining data by increasing the speed to two times or more and to output the data to the internal memory 365.

If the other memory is connected to the external interface part 370 (S735), the main controller 390 may check whether the letter used to label the other memory follows in sequence from the letter used to label the first external storage medium 300a, and determines whether the memories are connected in the correct order (S740).

If it is confirmed that the letter follows in sequence in operation S740, the main controller 390 may process the remaining data stored on the internal memory 365 in operation S730 to be played back and the data stored in the second external storage medium, that is, the other memory to be continuously played back (S745).

On the other hand, if the letter does not follow in sequence in operation S740, the main controller 390 may determine that the memories are connected in the wrong order, and may control the message processor 347 and video processor 345 to generate an OSD message indicating that "Memory is incorrectly connected" and to display the generated OSD message (S750).

If the signal received at operation S710 is a signal requesting playback of the data stored on the internal memory 365 (S755), the main controller 390 may control the memory controller 360, video decoder 340 and video processor 345 to read out and play back the data stored on the internal memory 365 (S760).

If it is confirmed that the data being played back is further stored in the other memory during operation S760, the main controller 390 may control the message processor 347 and video processor 345 so that an OSD message indicating the presence of the additional memory can be generated and displayed (S765).

If the user selects "YES" in response to the OSD message displayed at operation S765, that is, the connection to the other memory is selected (S770), the main controller 390 may continue playing back the currently played back data. In addition, the main controller 390 may perform operations S735 to S750. The remaining data played back at operation S745 is data stored on the internal memory 365.

In the exemplary embodiments of the present invention, not only the data stored on the internal memory 365 but also a list of the data stored in the first and the second external storage media 300a and 300b may be stored in a non-volatile memory, such as the ROM 375, and the stored list may be displayed on-screen to be provided to a user, in response to a user request. Accordingly, the user can easily search for a desired file by checking the data list stored in the external storage media, even if the first external storage medium 300a or the second external storage medium 300b is connected to the data processing apparatus 300.

In the data processing apparatus and method according to the exemplary embodiments of the present invention, if data is stored and played back in at least two memories, it is possible to prevent data loss occurring while replacing the memory, and thus the data can be seamlessly stored and played back.

In particular, transport streams being played back while replacing the external memory are stored in a storage region separately provided in the internal memory or in a separate storage medium, and are again stored in the replaced external memory, and thus the loss of transport streams being stored can be prevented in advance.

Additionally, transport streams being played back while replacing the external memory are stored at a speed two or more times faster than the playback speed of the streams in the internal memory. Therefore, the time required for replacing the external memory can increase.

Furthermore, the start address at the time of replacing the memory is stored, and accordingly the time of connecting to the memory can be correctly found. Even if the time shift function is not automatically performed, the data is automatically stored while replacing the memory, and therefore an exemplary embodiment of the present invention has the effect of preventing data loss.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A data processing method comprising:
storing data input from a source on a first memory (S210);
determining, in a determination, whether to connect to a second memory, if space left on the first memory, which is available for storing the data, reaches a threshold value (S220, S230); and
connecting the second memory if it is determined to connect to the second memory, and transferring first data stored since a time of the determination to connect to the second memory, to the connected second memory (S240-S260).

2. The method as claimed in claim 1, wherein the first memory is at least one of a removable memory and an embedded memory.

3. The method as claimed in claim 2, further comprising, if the first memory is the removable memory:
storing in an internal memory the first data if it is determined to connect to the second memory (S625); and
checking a start address of a region in which the first data is stored and storing the start address in the internal memory (S645).

4. The method as claimed in claim 2, further comprising, if the first memory is the embedded memory:
storing an address of the first memory in which the first data is stored if it is determined to connect to the second memory (S730).

5. The method as claimed in claim 1, further comprising:
labeling the first memory with one of a series of letters to indicate an order of storing the data if it is determined to connect to the second memory (S650); and
labeling the second memory with a letter which follows in sequence from the letter used to label the first memory if the second memory is connected (S655).

6. The method as claimed in any preceding claim, further comprising:
recording information indicating a presence of another memory, on the first memory if it is determined to connect to the second memory.

7. The method as claimed in claim 3, further comprising, prior to the transferring:
recording on the connected second memory a title of the first data recorded on the first memory, and a start address of the first data stored on the connected second memory, if the second memory is connected.

8. The method as claimed in any preceding claim, wherein the determining comprises generating an on-screen display (OSD) message asking whether to connect to the second memory, and displaying the message (S765).

9. The method as claimed in claim 8, wherein the determining further comprises displaying in the OSD message an amount of time available for storing data, which reduces as time elapses.

10. The method as claimed in claim 2 or claimed in any one of claims 3-9 as dependent on claim 2, further comprising, if the first memory is the removable memory:
processing the data stored on the first memory and playing back the processed data, if playback of the data stored on the first memory is requested;
informing that connection to another memory is required, if it is confirmed that second data is stored on the other memory while playing back the data;
storing on an internal memory remaining data which is not played back from the removable memory, prior to the connection to the other memory; and
if the other memory is connected, playing back the remaining data stored on the internal memory, and continuously playing back the second data stored on the connected other memory.

11. The method as claimed in claim 2 or any one of claims 3-10 as dependent on claim 2, further comprising, if the first memory is the embedded memory:
processing the data stored on the first memory and playing back the processed data, if playback of the data stored on the first memory is requested;
informing that connection to another memory is required, if it is confirmed that second data is stored on the other memory while playing back the data; and
if the other memory is connected, completing the playback of the data stored in the embedded memory, and continuously playing back the second data stored on the connected other memory.

12. The method as claimed in claim 10, further comprising, if the other memory is connected:
checking whether the connected other memory is the second memory wherein the playing back comprises playing back the first data stored on the second memory if it is confirmed that the other memory is the second memory.

13. The method as claimed in claim 12, wherein the checking comprises determining that the connected other memory is the second memory which continuously stores the data, if a letter on the other memory follows in sequence the letter on the first memory (S740, S745).

14. A data processing apparatus comprising:
a first memory (365) which stores data input from a source;
a message processor (347) which displays a message asking whether to connect to a second memory (300a), if space left on the first memory (365) reaches a threshold value;
an interface part (370) which is connected to the second memory (300a); and
a controller (360) which transfers to the connected second memory (300a) first data stored since a time it is determined to connect to the second memory (300a), if it is determined to connect to the second memory (300a) in response to the message and the second memory (300a) is connected.

15. The apparatus as claimed in claim 14, wherein the first memory (365) is at least one of a removable memory and an embedded memory.

16. The apparatus as claimed in claim 15, wherein, if the first memory is the removable memory,
if it is determined to connect to the second memory, the controller (360) stores in an internal memory the first data, together with a start address of a region in which the data is stored, and
if the second memory is connected to the interface part (370), the controller (360) checks the start address stored on an internal memory, and controls the interface part (370) to transfer to the connected second memory the first data stored since a time corresponding to the checking of the start address.

17. The apparatus as claimed in claim 15, wherein, if the first memory (365) is the embedded memory,
if it is determined to connect to the second memory (300a), the controller (360) stores an address of the first memory (365)in which the first data is stored, and
if the second memory (300a) is connected to the interface part (370), the controller (360) checks the stored address, and controls the interface part (370) to transmit to the connected second memory (300a) the first data stored since a time corresponding to the checking of the stored address.

18. The apparatus as claimed in claim 14, 15, 16 or 17, wherein, if it is determined to connect to the second memory (300a), the controller labels the first memory (365) with one of a series of letters to indicate the order of storing the data; and if it is determined to connect to the second memory (300a), the controller labels the second memory (300a) with a letter which follows in sequence from the letter used to label the first memory (365).

19. The apparatus as claimed in any one of claims 14-18, wherein the controller (360) records information indicating the presence of another memory on the first memory (365) if it is determined to connect to the second memory (300a).

20. The apparatus as claimed in any one of claims 14-19, wherein, if the connection to the second memory (300a) is completed, the controller (360) initializes the connected second memory (300a), records in the connected second memory (300a) a title of the first data recorded on the first memory (365) and the start address of the first data stored on the connected second memory (300a), and controls the first memory (365) to transfer the data to the second memory (300a) if the initialization is completed.

21. The apparatus as claimed in any one of claims 14-20, wherein the message processor (347) generates an on-screen display (OSD) message asking whether to connect to the second memory (300a), and displays the message.

22. The apparatus as claimed in claim 21, wherein the message processor (347) displays the available amount of time for storing which is reduced as an amount of time has elapsed on the OSD message.

23. The apparatus as claimed in claim 15 or any one of claims 16-22 as dependent on claim 15, further comprising, if the first memory is the removable memory:
a signal processor which processes the data stored on the first memory and plays back the processed data, if playback of the data stored on the first memory is requested,
wherein the controller controls the message processor to display a message informing that connection to another memory is required, if it is confirmed that second data is continuously stored on the other memory while playing back the data; temporarily stores the remaining data, which is not played back in the first memory, in an internal memory, prior to the connection to the other memory; and if the other memory is connected, controls the signal processor to play back the temporarily stored data and to play back the second data stored on the connected other memory.

24. The apparatus as claimed in claim 15 or any one of claims 16-22 as dependent on claim 15, further comprising, if the first memory is the embedded memory:
a signal processor which processes the data stored on the first memory and plays back the processed data, if playback of the data stored on the first memory is requested,
wherein the controller controls the message processor to display a message informing that connection to another memory is required, if it is confirmed that second data is stored on the other memory while playing back the first data; and if the other memory is connected, controls the signal processor to complete the playback of the remaining data stored on the first memory and to play back the second data stored on the connected other memory.

25. The apparatus as claimed in claim 23, wherein, if the other memory is connected,
the controller checks whether the connected other memory is the second memory; and controls the signal processor to play back the remaining data stored on the first memory and to play back the first data stored on the second memory if it is checked that the other memory is the second memory.

26. The apparatus as claimed in claim 25, wherein the controller determines that the connected other memory is the second memory which continuously stores the data, if a letter on the other memory follows in sequence the letter on the first memory.
